# EUROPEAN PATENT APPLICATION

(11) **EP 2 759 240 A1**
(43) Date of publication of application: **30.07.2014**
(21) Application number: 13153014.9
(22) Date of filing: 29.01.2013
(51) Int. Cl.: A47J 43/25

(54) **Slicer/grater cover for a bowl**

(71) Applicant: Rosti Mepal Support B.V., 7240 AE Lochem (NL)
(72) Inventor: Weernink, Johannes Hermanus, 7478 BL Diepenheim (NL)
(74) Representative: Mink-Lindenburg, Charlotte Hildegard

(57) **Abstract**

The invention relates to a system (1) for fractionating food by manually moving a piece of food over a stationary fractionating element. The system comprises a set of fractionating elements, such as slicers and/or graters, and a cover (2) for a holder, such as a bowl (20). The cover is provided with an aperture, wherein the fractionating elements can be exposed in front of the aperture. According to the invention the fractionating elements form separate elements and the aperture and fractionating elements are provided with co-operating fastening means for releasably fastening one of the fractionating elements in the aperture.

## Description

The invention relates to a system for fractionating food by manually moving a piece of food over a stationary fractionating element, the system comprising a set of fractionating elements, such as slicers and/or graters, and a cover for a holder, such as a bowl, which cover is provided with an aperture, wherein the fractionating elements can be exposed in front of the aperture

Such a system is known from CA 1039628. In the known device a comminuting member is incorporated. The facets of the comminuting member constitute different comminuting elements for food grating, shredding or slicing. By moving the comminuting member one of the facets comes to lie in front of the aperture. The other facets are not exposed.

The known device has a number of drawbacks. Firstly each of the facets forms a relatively small exposed working area as a consequence of which many repetitive movements are necessary to fractionate the food. Furthermore the moving comminuting member is rather complex component to produce, but also to clean after use.

The invention has for its object to provide a device of the type stated in the preamble which obviates the above stated drawbacks. The device according to the invention has for this purpose the features that the fractionating elements form separate elements and the aperture and fractionating elements are provided with co-operating fastening means for releasably fastening one of the fractionating elements in the aperture.

By releasably fastening each fractionating element separately in the aperture, the dimensions of the fractionating elements can be optimised by choosing them as large as possible while remaining sufficient free cover surface to provide safe working conditions. Additionally, by fastening each fractionating element directly in the aperture the surface of the cover can remain flush with the surface of the fractionating element which further contributes to safe working conditions.

According to a practical embodiment of the system according to the invention the co-operating fastening means are arranged around the edges of the aperture and the fractionating elements. Suitable fastening means are snap-fit fastening means or fastening means having a click connection.

In a further preferred embodiment the system according to the invention the cover is provided with a recess to which the aperture provides access, which recess is arranged for storage of the set of fractionating elements in a stacked mode. The advantageous recessed storage of the loose fractionating elements in the cover allows for a compact embodiment of the system.

In another preferred embodiment the aperture is situated substantially in the centre of the cover and is surrounded by the remaining cover surface. A free remaining cover surface surrounding the fractionating element present in the aperture allows for large movements of the food without the risk of injuries.

According to yet another preferred embodiment the system further comprises a lid to close of the aperture. The lid shields of the fractioning elements for hygienic purposes, protects the user from inadvertently contacting the sharp fractioning elements and allows storing the fractionated food in the holder.

Preferably the cover is made of transparent material that allows the user to see the resulting amount of fractionated food in the holder.

More preferably the cover and the set of fractionating elements have a slightly convex shape that contributes to the overall firmness of the system.

Even more preferably the aperture and the set of fractionating elements have a generally rectangular shape that defines a natural track for the movement of the food over the fractionating element. In a further preferred embodiment the system according to the invention further comprises a bowl on which the cover can be fitted such that the bowl forms a receptacle for the fractionated food.

The invention will now be described in more detail with reference to the following figures.
Figure 1 shows a schematic view of a known bowl on which a first embodiment of a system according to the present invention is placed;
Figure 2 shows the system of figure 1 in exploded view; and
Figure 3 shows a schematic view of a second embodiment of a system according to the invention in exploded view.

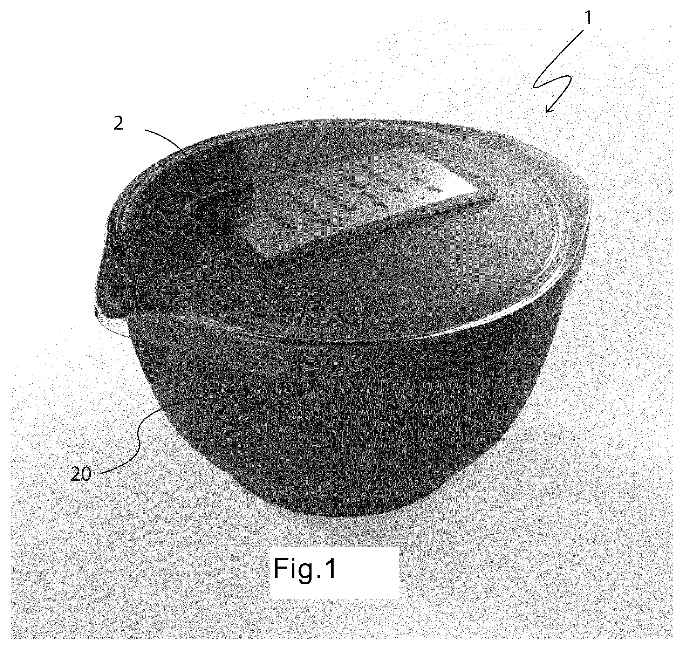

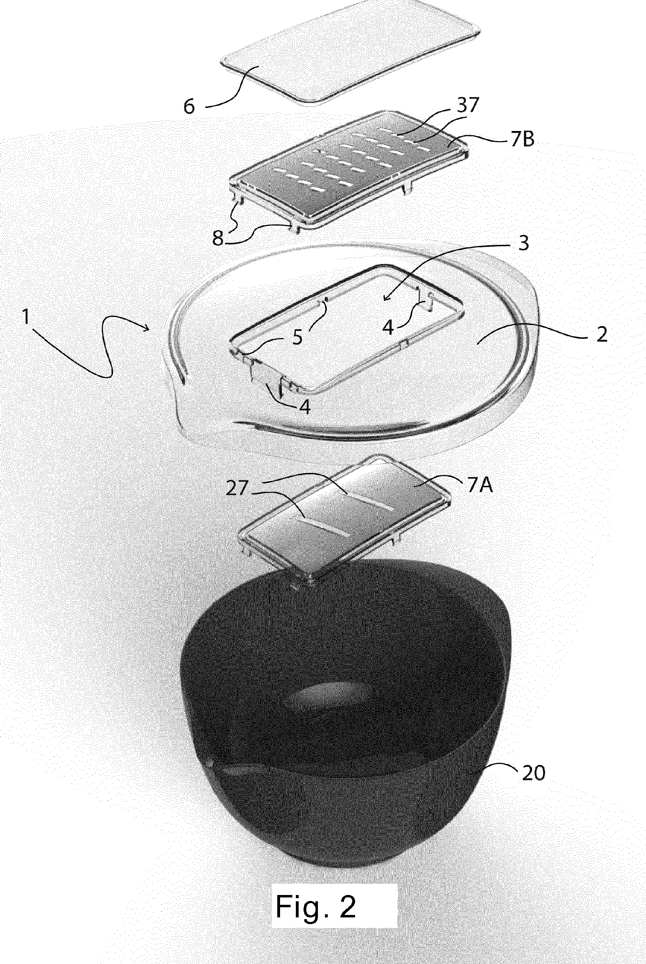

Figure 1 shows a schematic view of a system 1 according to the invention placed on a bowl 20. Figure 2 shows a schematic view of the system 1 in exploded view.

System 1 comprises a cover 2 to be fitted detachably on a bowl 20. In the preferred embodiment shown the bowl is a Margrethe bowl.

According to the invention the cover 2 is arranged for fractionating food by manually moving a piece of food in solid form over a stationary fractionating element. In figure 2 two types of fractionating elements 7A and 7B are shown. 7A is a slicer element having a number of slits 27 with a cutting edge for slicing solid food, such as cheese, vegetables and fruit into pieces. The other fractionating element is a grater 7B having smaller openings or slits 37 with cutting edges for grating solid food into smaller pieces.

The aperture 3 is arranged to receive one of the fractionating elements 7A, 7B. Thereto the cover 2 has a shape corresponding to the shape of the fractionating elements. In the preferred embodiment this shape is generally rectangular. Other shapes may be chosen suited to the envisaged use.

Each of the separate fractionating elements is provided with fastening means 8 that are arranged to cooperate with fastening means 5 in the cover 2 near the aperture 3. The cooperating fastening means 5 and 8 are arranged for releasably fastening the fractionating element in the aperture 3. Suitable fastening means are snap-fit fastening means or fastening means having a click connection. In the preferred embodiment fastening means 8 are resilient lips and fastening means 5 are recesses for accommodating the resilient lips. Resilient lips 8 are arranged around the outer periphery of the fractionating elements 7A and 7B. Recesses 5 are arranged along the inner periphery of aperture 3.

Cover 2 is further provided with a recess to which the aperture 3 provides access. The recess is arranged for storage of the set of fractionating elements 7A and 7B in a stacked mode. In the preferred embodiment shown the recess is defined between lips 4 extending in the direction substantially perpendicular to the surface of the cover 2. In the storage position of system 1 fractionating element 7A or 7B can be placed in the aperture 3, while the remaining fractionating element 7B or 7A can be placed in the recess between lips 4.

System 1 further comprises a lid 6 to close off the aperture 3. In the preferred embodiment shown lid 6 and aperture 3 are provided with co-operating sealing means, such as closing rims.

The aperture 3 is situated substantially in the centre of cover 2, such that the remaining cover surface surrounds the aperture 3.

Cover 2 is made of a transparent material that is preferably plastic. Bowl 20 is also preferably made of a suitable plastic material.

The surfaces of the fractionating elements and the surface of the cover 2 are shaped correspondingly such that in the assembled state the fractionating element received in the aperture 3 makes up a flush surface with the remaining surface of the cover 2. Preferably both the cover and the set of fractionating elements have a slightly convex shape.

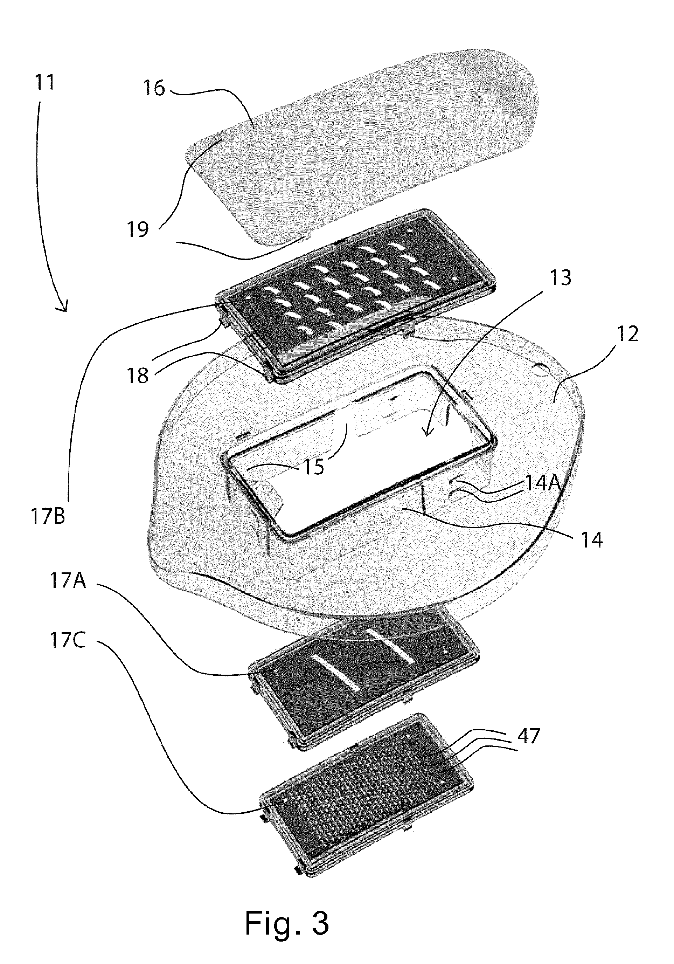

Figure 3 shows a schematic view of a second embodiment of a system 11 according to the invention. Compared to system 1 in system 11 all reference numerals have been raised by ten.

System 1 and system 11 show great resemblance. All that has been stated above with respect to the components of system 1 equally applies to the corresponding components of system 11.

System 11 differs with respect to system 1 in that three fractionating elements 17A, 17B and 17C are provided. Other differences can be found in the recess 14 in the cover 12 and in the lid 16. All differences will be described in the following.

In addition to the slicer 17A and the grater 17B another grater 17C forms part of the set of fractionating elements. The grater 17C is provided with a large number of openings 47 having a cutting edge or serration for grating the food with an even higher degree of fineness compared to grater 17B. All fractionating elements 17A, 17B and 17C are provided with resilient lips 18 that can be received in recesses 15 in cover 12 near aperture 13.

The recess 14 is formed by a surrounding wall extending substantially transverse to the surface of the cover 12. In the wall 14 protrusions14A are present on which fractionating elements 17A, 17B and 17C can be engage in the storage position.

The cover 16 is arranged to be clicked on cover 12 to close off aperture 13. In the preferred embodiment shown cover 16 is provided with lips 19.

The inventive thought lies in arranging fractionating elements in an aperture in a cover of a bowl in a releasable manner and flush with the surface of the cover.

The user can choose a fractionating element, fasten it in the cover and repetitively move a piece of food over the stationary fractionating element when the cover is fixed to a bowl serving as a receptacle for the fractionated food.

The invention is not limited to the embodiments described and shown herein. It will be clear that the number of fractionating elements can be increased by adapting the depth of the recess. This can be performed by a person skilled in the art after having read this text. Furthermore the type of fractionating elements can be changed as well as the cooperating fastening means for releasably fastening the fractionating elements separately in the aperture.

The invention relates generally to any embodiment falling within the scope of protection as defined in the claims and as seen in the light of the foregoing description and accompanying drawings.

## Claims

1. System for fractionating food by manually moving a piece of food over a stationary fractionating element, the system comprising a set of fractionating elements, such as slicers and/or graters, and a cover for a holder, such as a bowl, which cover is provided with an aperture, wherein the fractionating elements can be exposed in front of the aperture, **characterised in that***,* the fractionating elements form separate elements and the aperture and fractionating elements are provided with co-operating fastening means for releasably fastening one of the fractionating elements in the aperture.

2. System as claimed in claim 1, wherein the co-operating fastening means are arranged around the edges of the aperture and the fractionating elements.

3. System as claimed in claim 1 or 2, wherein the cover is provided with a recess to which the aperture provides access, which recess is arranged for storage of the set of fractionating elements in a stacked mode.

4. System as claimed in any of the preceding claims, wherein the aperture is situated substantially in the centre of the cover and is surrounded by the remaining cover surface.

5. System as claimed in any of the preceding claims, wherein the system further comprises a lid to close of the aperture.

6. System as claimed in any of the preceding claims, wherein the cover is made of transparent material.

7. System as claimed in any of the preceding claims, wherein the cover and the set of fractionating elements have a slightly convex shape.

8. System as claimed in any of the preceding claims, wherein the aperture and the set of fractionating elements have a generally rectangular shape.

9. System as claimed in any of the preceding claims further comprising a bowl on which the cover can be fitted such that the bowl forms a receptacle for the fractionated food.
